# EUROPÄISCHE PATENTANMELDUNG

(11) **EP 4 696 860 A1**
(43) Veröffentlichungstag der Anmeldung: **18.02.2026**
(21) Anmeldenummer: 25190293.8
(22) Anmeldetag: 17.07.2025
(51) Int. Cl.: E06B 9/72, H02K 1/27, H02K 7/14, H02K 11/215, H02K 29/08, H02K 3/28, H02K 7/116, H02K 21/14

(54) **VORRICHTUNG ZUM ANTRIEB EINER WICKELWELLE**

(30) Priorität: 14.08.2024 DE 102024123190
(71) Anmelder: SELVE Vermögensverwaltung GmbH & Co. KG, 58513 Lüdenscheid (DE)
(72) Erfinder: Weiper, Jost, 57462 Olpe (DE)
(74) Vertreter: Ostriga PartGmbB

(57) **Zusammenfassung**

Die Erfindung betrifft eine Vorrichtung zum Antrieb einer Wickelwelle für einen auf- und abwickelbaren Behang, wie Rollläden, Rolltore, Screens, Markisen und Jalousien, mit einem Motor bestehend aus Stator und Rotor, einem Getriebe zur Übertragung der Bewegung des Motors auf den Behang sowie einer Bremse.

Die Aufgabe der Erfindung besteht darin, eine einfach aufgebaute und kostengünstig herstellbare Vorrichtung zum Antrieb einer Wickelwelle zu schaffen, die möglichst viele der vorgenannten Nachteile der bisherigen Asynchronmotore eliminiert, aber mit den bisher verwendeten Werkzeugen und automatischen Maschinen zur Produktion dieser bisherigen Asynchronmotorlösung hergestellt werden können und zusätzlich in der Drehzahl verändert werden kann.

Die Lösung besteht darin, dass der Motor als Synchronmotor mit permanenter Erregung ausgebildet ist, bei dem der Rotor mindestens einen mehrpoligen Permanentmagneten aufweist und die Statorwicklung mehrphasig ausgebildet ist, wobei sich der Rotor mit exakt der Drehzahl des äußeren, durch die Statorwicklung erzeugten Magnetfeld bewegt.

## Beschreibung

Die Erfindung betrifft eine Vorrichtung zum Antrieb einer Wickelwelle für einen auf- und abwickelbaren Behang, wie Rollläden, Rolltore, Screens, Markisen und Jalousien, mit einem Motor bestehend aus Stator und Rotor, einem Getriebe zur Übertragung der Bewegung des Motors auf den Behang sowie einer Bremse.

Eine derartige Antriebsvorrichtung mit einem Asynchronmotor ist grundsätzlich bereits aus der EP 0 822 316 15 B1 der Anmelderin bekannt.

Dort ist eine Vorrichtung beschrieben, mit der die Wickelwelle mit einem zweiphasigen Asynchronmotor angetrieben wird. Die für diese Anwendung notwendige Bremsvorrichtung ist dabei üblicherweise auf dem Rotor des Motors angebracht und wird durch das Magnetfeld des Rotors betätigt. Sie kann als Konusbremse oder als Scheibenbremse mit einer oder auch mehreren Bremsscheiben aufgebaut sein. Die Herabsetzung der Motordrehzahl auf die für die Betätigung der Wickelwelle notwendige Drehzahl wird durch die Verwendung eines mehrstufigen Untersetzungsgetriebes erreicht. Die Erfassung des Verfahrweges für die Abschaltung des Antriebes in den Endlagen des Behanges erfolgt über ein Sensorsystem an der Rotorwelle des Motors durch ein Gebersystem und einen dazu passenden Sensor. Dieses kann wie in EP 0 822 314 A3 von der Anmelderin beschrieben entweder als optisches Sensorsystem oder wie oft angewendet als magnetisches Sensorsystem ausgeführt sein.

Beim Betrieb des zweiphasigen Asynchronmotors wird eine Phase der Wicklung an das Wechselspannungsnetz angeschlossen, während die zweite Phase des Motors in Reihe mit einem Betriebskondensator, der eine nennenswerte Baugröße aufweist, ebenfalls an das gleiche Wechselspannungsnetz angeschlossen wird. Dadurch entsteht im Innern des Stators ein rotierendes Magnetfeld (Drehfeld), welches sich exakt mit der Frequenz der angelegten Wechselspannung dreht. Dieses rotierende Magnetfeld induziert in die im Rotor befindlichen Leiterschleifen Spannungen, die dort Ströme zur Folge haben. Diese Ströme erzeugen dadurch wieder Magnetfelder, die sich zum Drehfeld des Ständers ausrichten und dadurch eine Drehung des Rotors zur Folge haben. Da zur Induktion der Spannungen in die Leiterschleifen des Rotors eine Änderung des magnetischen Flusses notwendig ist, dreht sich der Rotor langsamer als das Ständerfeld, also asynchron dazu. Je stärker das dem Motor abgeforderte Drehmoment wird, umso stärker fällt auch die Drehzahl des Rotors ab.

Zur Herstellung derartiger Asynchronmotoren werden zunächst aus einem dafür geeignetem Trafoblech die Bleche für den Ständer mit den entsprechenden Nuten und gleichzeitig die für den Rotor notwendigen Bleche ebenfalls mit den entsprechenden Nuten gestanzt. Diese Bleche werden abhängig von der geforderten Leistung des Motors sowohl für den Stator, als auch für den Rotor zu Blechpaketen unterschiedlicher Länge aufgestapelt und fest verbunden.

Zur Vervollständigung des Stators werden zunächst Isolierungen in die Nuten eingelegt. Die notwendige Wicklung, bestehend aus mit Lack isoliertem Kupferdraht, welche außerhalb des Stators gewickelt beziehungsweise vorbereitet und anschließend in einem Vorgang in die Nuten des Stators maschinell eingezogen wird.

Die Nuten der Rotorbleche werden mit gut leitendem Metall ausgegossen und an den Enden ebenfalls mit gut leitendem Metall elektrisch verbunden und so ein Käfigläufer mit den Leiterschleifen hergestellt. Nach einer mechanischem Endbearbeitung wird das Rotorblechpaket auf eine Motorwelle geschoben und fixiert.

Für die Herstellung dieser Art von Antrieben sind demnach eine Vielzahl von aufwendigen Arbeitsschritten notwendig. Um solche Motore kostengünstig und in großer Anzahl herzustellen, verwenden die Hersteller viele spezielle und teure Werkzeuge und Automaten.

Nachteilig an der zuvor beschriebenen Antriebsbauweise ist, dass derartige Antriebe einen schlechten Wirkungsgrad aufweisen und einen großen Anteil der zugeführten Energie in nicht gewünschte Wärme umsetzen. Diese Erwärmung muss durch zusätzliche thermisch betätigte Schalter auf das für die Wicklung zulässige Maß begrenzt werden. Aufgrund der schnellen Erwärmung ist die mögliche Laufzeit einer solchen Vorrichtung auf wenige Minuten begrenzt.

Wie auch in EP 2 821 583 B1 beschrieben, gestaltet sich eine variable Drehzahlregulierung einer Asynchronmaschine sehr komplex, da auf die Frequenz der Speisespannung in der Art einzuwirken ist, dass auch die durch die unterschiedliche Belastung des Motors veränderte Drehzahl entsprechend auszugleichen ist.

Um dieses Problem der Drehzahlregulierung des Asynchronmotors zu überwinden ist es auch bekannt, Vorrichtungen zur Bewegung von Wickelwellen für diese Anwendung mit Gleichstrommotoren mit Bürsten und Kommutatoren auszustatten.

Ein üblicher Gleichstrommotor mit Bürsten verwendet oft am Motorgehäuse befestigte Permanentmagnete und einen Rotor bestehend aus Blechen mit mehreren Spulen. Die Wicklungsenden der Spulen sind auf ringförmig angeordnete isolierte Bleche geführt, die als Kommutator bezeichnet werden. Die an diese Bleche anliegenden Bürsten schalten immer diejenige Wicklung an die angelegte Spannung, so dass sich eine Abstoßung des durch den Rotor entstehenden Magnetfeldes zum Magnetfeld des im Gehäuse angeordneten Permanentmagneten ergibt. Dadurch dreht der Rotor. Die Umschaltung der Spannung auf die nächste Wicklung des Rotors wird als Kommutierung bezeichnet und findet in dem gerade beschriebenen Motor mechanisch statt. Der Umschaltzeitpunkt ist direkt abhängig von der rotatorischen Lage des Rotors. Gleichstrommotore dieser Art unterliegen einem Verschleiß an den Bürsten und dem mechanischen Kommutator. Zur Speisung dieser Motoren wird entweder ein Gleichstromnetz oder ein voluminöses Netzteil benötigt, zusätzlich eine separate elektronische Baugruppe zur Drehzahlsteuerung.

Alternativ wird in EP 2 821 583 B1 die Verwendung eines bürstenlosen Gleichstromantriebs mit elektronischer Kommutierung zur Lösung des Problems beschrieben. Motore mit elektronischer Kommutierung haben nicht den Nachteil des Verschleißes am Kommutator und den Bürsten. Bei diesen Motoren befindet sich typischerweise im Stator eine vielphasige Wicklung und der Rotor trägt Permanentmagnete. Das Magnetfeld der Permanentmagnete ist in Bezug auf das Motorgehäuse nicht gestellfest, sondern rotiert. Um diesen Motor zu betreiben, bedarf es einer externen elektronischen Steuerung. Die Rotorlage dient als Eingangsinformation für die elektronische Steuerung und abhängig von der Rotorlage wird die benachbarte Wicklung bestromt, sodass der Rotor weiterdreht. Die Kommutierung findet nicht mechanisch, sondern elektronisch abhängig von der Rotorlage in der elektronischen Steuerung statt. Diese Bauart benötigt die exakte Erfassung der Rotorlage durch mehrere im Motor integrierte Sensoren nebst einer aufwendigen elektronischen Steuerung, die die elektronische Kommutierung und die Drehzahlregelung übernimmt.

Beide oben beschriebenen Typen von Gleichstromantrieben haben zu den bisher verwendeten Asynchronmotoren andere im Motor verwendete Blechformen und Fertigungsverfahren und können nicht mit der für Asynchronmotore verwendeten Fertigungstechnik hergestellt werden.

Ausgehend von der EP 2 821 583 B1 besteht die Aufgabe der Erfindung deshalb darin, eine einfach aufgebaute und kostengünstig herstellbare Vorrichtung zum Antrieb einer Wickelwelle für einen auf- und abwickelbaren Behang, wie Rollläden, Rolltore, Screens, Markisen und Jalousien zu schaffen, die möglichst viele der vorgenannten Nachteile der bisherigen Asynchronmotore eliminiert, aber mit den bisher verwendeten Werkzeugen und automatischen Maschinen zur Produktion dieser bisherigen Asynchronmotorlösung hergestellt werden können und zusätzlich in der Drehzahl verändert werden kann.

Die Lösung der Aufgabe ergibt sich aus den nachfolgenden Merkmalen des Anspruchs 1:
Vorrichtung zum Antrieb einer Wickelwelle für einen auf- und abwickelbaren Behang, wie Rollläden, Rolltore, Screens, Markisen und Jalousien, mit einem Motor bestehend aus Stator und Rotor,
einem Getriebe zur Übertragung der Bewegung des Motors auf den Behang sowie einer Bremse, **dadurch gekennzeichnet, dass** der Motor als Synchronmotor mit permanenter Erregung ausgebildet ist,
bei dem der Rotor mindestens einen mehrpoligen Permanentmagneten aufweist und die Statorwicklung mehrphasig ausgebildet ist, wobei sich der Rotor mit exakt der Drehzahl des äußeren, durch die Statorwicklung erzeugten Magnetfeld bewegt.

Die erfindungsgemäße Lösung hat grundsätzlich den Vorteil, dass sie eine einfach aufgebaute und kostengünstige, mit den bisher verwendeten Werkzeugen und automatischen Maschinen zur Produktion der Asynchronmotoren nach dem Stand der Technik hergestellte Vorrichtung ist, die auch drehzahlgesteuert ist.

Erfindungsgemäß verwendet man somit in einem herkömmlichen Stator einer Asynchronmaschine als Rotor einen Rotor mit mindestens einem mehrpoligen Permanentmagnet und erhält damit einen Synchronmotor mit permanenter Erregung (PMSM). Der Rotor dreht sich exakt mit der Drehzahl des äußeren durch die Statorwicklung erzeugten Magnetfeldes. Bei Belastung des Motors hinkt der Rotor um den sogenannten Polradwinkel bei gleicher Drehzahl des Magnetfeldes des Stators hinterher. Zwischen dem Magnetfeld des Stators und dem des Rotors bildet sich also der für Synchronmaschinen typische Polradwinkel aus. Der Polradwinkel ist proportional zum abgeforderten Drehmoment des Motors. Wird die Last des Motors zu groß, fällt der Motor außer Tritt und bleibt stehen.

Wird das Statorblechpaket dreiphasig, wie bei einem Drehstrommotor bewickelt, können an diese Wicklung drei um 120°verschobene Sinusspannungen angelegt werden. Diese Art von Motoren benötigen als Speisung lediglich ein dreiphasiges sinusförmiges Netz um als Motor arbeiten zu können.

Als Vorteil der PMSM-Lösung im Vergleich zur Asynchronmaschine ist die kleinere Baugröße und die größere Laufruhe zu sehen. Nachteil der Verwendung eines Synchronmotors ist, dass der Motor bei direktem Betrieb an der üblichen Netzversorgung nicht anläuft, erst wenn der Rotor die Drehzahl des Statorfeldes erreicht und synchron läuft, rotiert er weiter. Da in unserer Anwendung auch eine Drehzahlverstellung gewünscht ist, bietet es sich an, diesen PMSM an einer Elektronik zu betreiben, die in der Lage ist, ein dreiphasiges Drehstromnetz variabler Frequenz und Spannung zu erzeugen. Damit existiert gleichzeitig auch eine Lösung für das Anlaufen des Motors.

Um die für diese Anwendung notwendige Abschaltung des Motors in den Endlagen des Behanges zu erhalten, ist wie bei den bekannten Standardantrieben, zusätzlich auf dem Rotor ein Magnetrad als Geber und Hallelemente als Sensor gestellfest verbaut. Diese Komponenten dienen wie bisher als Wegsensor für den Behang. Ist weiter auch der Winkel zwischen dem externen Gebermagnetrades und dem Rotormagnet bekannt, kann so auch der Polradwinkel des Synchronmotors erfasst werden und man hat eine Größe für das dem Motor abgeforderte Drehmoment, das zur Endlagensteuerung der Vorrichtung verwendet werden kann. Alternativ zu dem separaten Gebermagnetrad kann auch der auf dem Rotor befestigte Rotormagnet als Lagegeber verwendet werden.

Eine Ausführungsform der erfindungsgemäßen Vorrichtung zum Antrieb einer Wickelwelle ist dadurch gekennzeichnet, dass der mehrpolige Permanentmagnet mehrere Polpaare enthält.

Mehrpolige Permanentmagnete mit mehreren Polpaaren können die magnetische Kraft über eine größere Fläche oder auf spezifische Bereiche konzentrieren. Dies kann zu einer effizienteren Nutzung des Magnetfelds führen, da mehrere Pole eine gleichmäßigere Verteilung des Magnetflusses ermöglichen. Mehrpolige Permanentmagnete mit mehreren Polpaaren tragen dazu bei, Geräusche und Vibrationen in Maschinen zu reduzieren. Magnete besitzen grundsätzlich immer das Vielfache von zwei Polen. Deshalb spricht man oftmals auch von Polpaar.

Auch ist es bei einer weiteren Ausführungsform möglich, dass das Statorblechpaket als ein auch für Asynchronmotore übliches Statorblechpaket ausgebildet ist.

Dies hat den Vorteil, dass man die bisher bei der Herstellung von Asynchronmotoren verwendeten Werkezeuge und automatische Maschinen zur Produktion auch für die erfindungsgemäße Vorrichtung verwenden kann.

Des Weiteren ist es möglich, dass die erfindungsgemäße Vorrichtung einen Stator enthält, der mit einer dreiphasigen Statorwicklung versehen ist.

In einer dreiphasigen Statorwicklung erzeugt jede Phase ein Magnetfeld, das zeitlich um 120 Grad versetzt ist. Dies führt zu einem gleichmäßigen, kontinuierlichen Drehmoment, was Vibrationen reduziert und den Betrieb ruhiger macht. Zum Beispiel würde eine zweiphasige Statorwicklung bei einem PMSM-Antrieb zwar funktionieren, aber sehr unruhig laufen. Selbst wenn bei einer dreiphasigen Statorwicklung eine Phase ausfällt (z.B. durch einen Leitungsbruch), kann das System in einem eingeschränkten Modus weiterarbeiten. Bei einem zweiphasigen System würde der Ausfall einer Phase dagegen zu einem vollständigen Stillstand führen. Dreiphasige Systeme sind in der Industrie weit verbreitet und können leicht für verschiedene Anwendungen angepasst werden. Das betrifft auch die notwendigen Halbleiter.

Eine weitere Ausführungsform der Erfindung ist dadurch gekennzeichnet, dass die notwendige Bremseinheit in dem Untersetzungsgetriebe angeordnet ist, wobei es in diesem Zusammenhang auch möglich ist, dass die Bremse als Federschlingenbremse ausgebildet ist.

Auf vorteilhafte Weise ist es bei einer weiteren Ausführungsform möglich, dass eine Sensoreinheit auf dem Rotor angeordnet ist, die zur Endlagensteuerung des Behanges verwendet werden kann.

In dem Zusammenhang ist es bei einer Ausführungsform der Erfindung auch möglich, dass die auf dem Rotor angeordnete Sensoreinheit auch dafür benutzt wird, um den Polradwinkel der Synchronmaschine und damit die Belastung des Behanges zu ermitteln.

Letztlich ist eine Ausführungsform der Erfindung dadurch gekennzeichnet, dass eine Steuerelektronik, eine Speisespannung variabler Frequenz und Spannung zur Verfügung stellt.

Das versetzt die Steuerungselektronik auf vorteilhafter Weise in die Lage, sowohl die Drehzahl der Ausführungsform der Erfindung über die Frequenz zu regulieren, als auch das notwendige Drehmoment innerhalb der Anwendung durch die Steuerspannung anzupassen um die Drehzahl konstant zu halten. Mit der Steuerspannung kann auch die Wirkleistungsaufnahme des Motors beeinflusst werden, was zur Reduzierung der Erwärmung führt. Die Steuerspannung ermöglicht es, den Motor immer im optimalen Betriebsbereich zu halten.

Zusammengefasst ermöglicht die variable Steuerspannung und die variable Frequenz bei einem PMSM-Antrieb eine flexible, präzise und effiziente Steuerung, was zu einer Vielzahl von Vorteilen in der Rollladenanwendung führt.

Weitere Vorteile der Erfindung ergeben sich aus der nachfolgenden Beschreibung eines Ausführungsbeispiels. Es zeigen:
**Fig. 1****:**ein Motor zum Antrieb einer Wickelwelle,
**Fig. 2****:**der Motor gemäß Fig. 1 in Explosionsdarstellung,
**Fig.3****:** Stirnansicht des Motors gemäß der Fig. 1 und 2,
**Fig. 4****:**Schnittdarstellung gemäß Schnittlinien IV - IV in Fig. 3 und
**Fig. 5****:**ein Schema der Statorwicklung des erfindungsgemäßen Motors.

In den Zeichnungen ist insgesamt ein Motor zum Antrieb einer nicht dargestellten Wickelwelle mit der Bezugsziffer 10 gekennzeichnet.

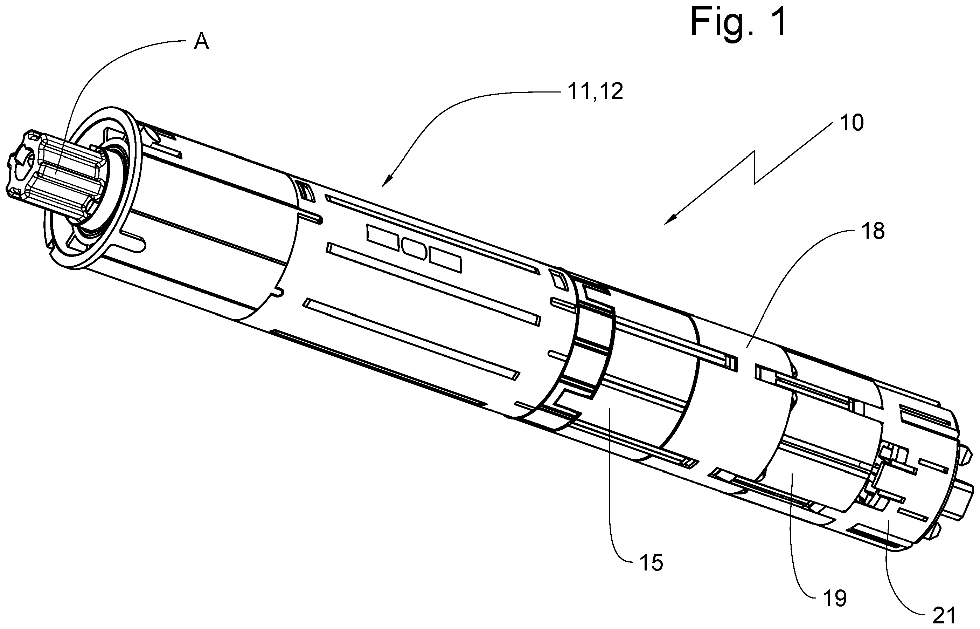

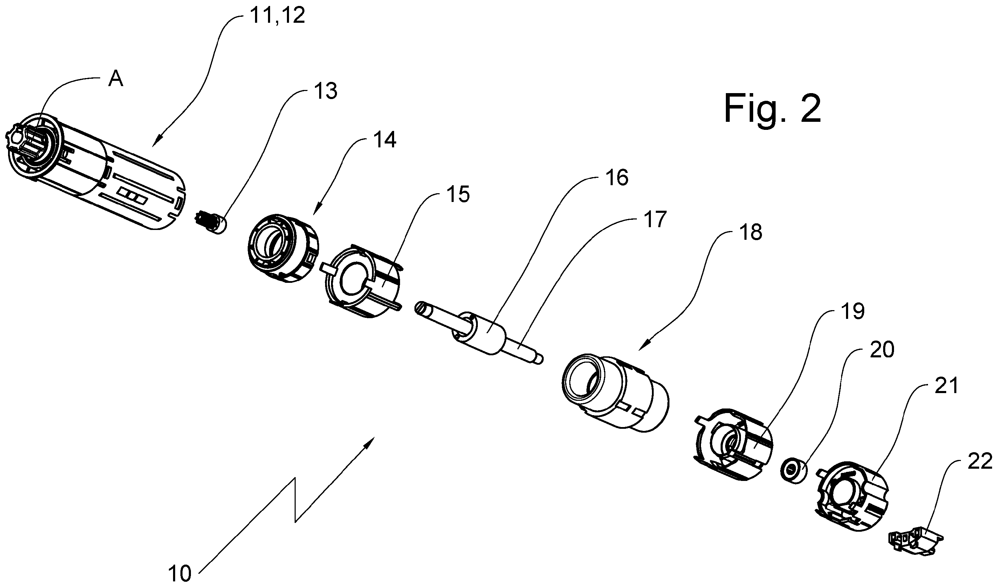

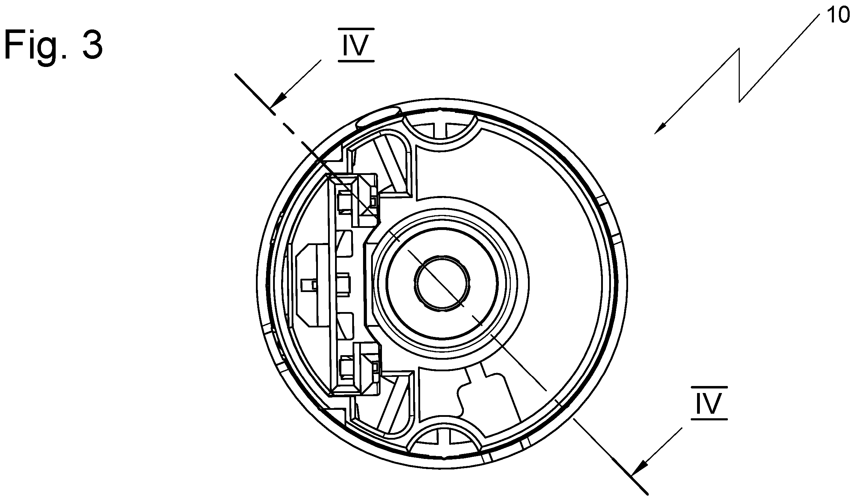

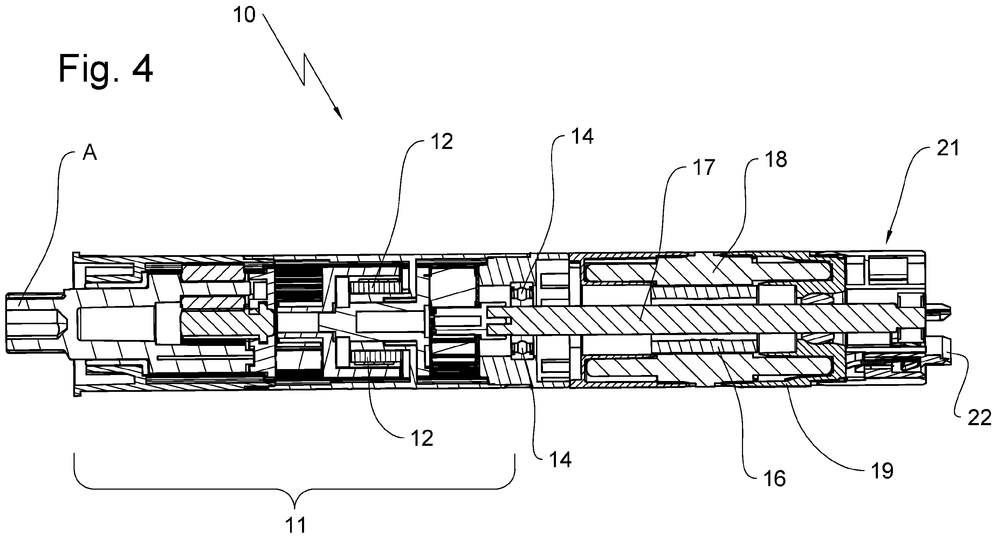

Der Motor 10 ist in den Figuren 1 bis 4 dargestellt. Gemäß der Explosionsdarstellung in Fig. 2 wird der Motor 10 von links nach rechts aus einem Antriebsritzel A, welches mit einem Getriebe 11 mit Federbremse 12 verbunden ist, einen Antriebsritzel 13, einem Lagerschild mit Lager 14, einer Wickelkopfkappe 15, einem Rotor 16 mit Rotorwelle 17, einem Stator 18 mit einem Wickelkopf, einer Wickelkopfkappe 19 mit Lager, einem Magnetrad 20, einem Kontaktschild 21 und einem Kontaktträger 22 gebildet.

Wesentlich ist am erfindungsgemäßen Motor 10, dass der Rotor 16 mindestens einen Permanentmagneten (PM) aufweist und dass der Stator mit einer mehrphasigen Statorwicklung versehen ist, wobei im Betriebszustand sich der Rotor 16 mit der exakt der Drehzahl des äußeren durch die Statorwicklung STW erzeugten Magnetfeld bewegt.

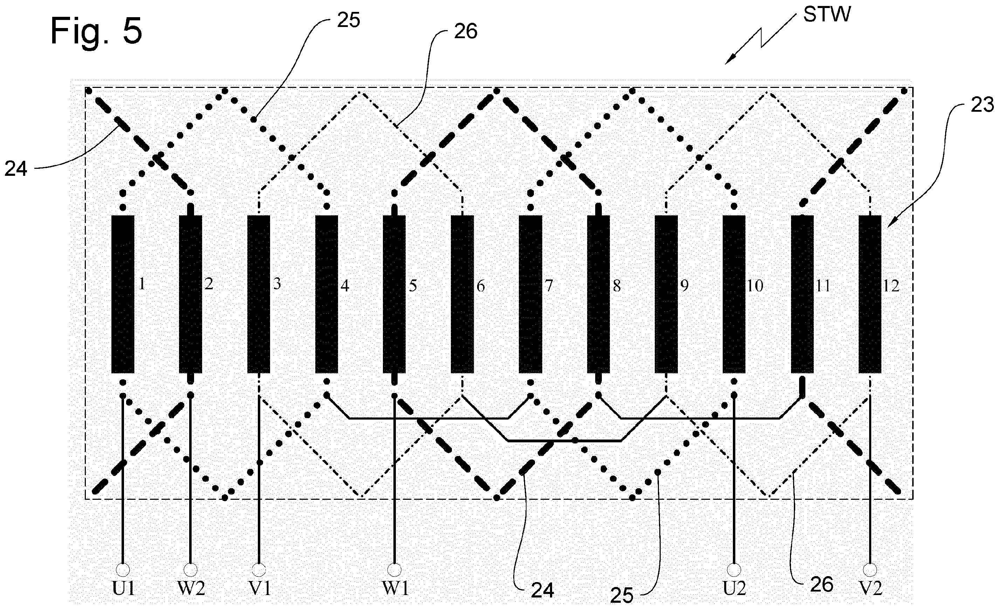

In der Figur 5 ist im Rahmen einer Abwicklung des Stators 18 (strichlinierter, rechteckiger Bereich) das Schema der Statorwicklung STW dargestellt. Mit den Bezeichnungen 1 bis 12 sind dort Nuten 23 zu erkennen, bei der in der dreiphasigen Ausführung der Statorwicklung STW drei unterschiedlich gekennzeichnete lackisolierte Kupferdrähte 24, 25 und 26 eingelegt sind, die mit den Anschlüssen U1, U2 und W1, W2 sowie V1, V2 verbunden sind.

Im Betriebszustand dreht sich der Rotor 16 exakt mit der Drehzahl des äußeren Magnetfeldes der Statorwicklung STW. Bei Belastung des Motors 10 hängt der Motor 16 um den sogenannten Lastwinkel bei gleicher

Drehzahl der Statorwicklung STW hinterher. Wird die Last des Motors 10 zu groß, fällt der Motor 10 außer Tritt und bleibt stehen. Wird die Statorwicklung STW dreiphasig wie bei einem Drehstrommotor gewickelt, können an dieser Wicklung drei um 120° verschobene Sinusspannungen angelegt werden. Diese Art von Motoren 10 benötigen also als Speisung ein dreiphasiges, sinusförmiges Netz, wobei dann keine elektronische Kommutierung stattfindet.

### Bezugszeichenliste

- 10: Motor
- 11: Getriebe
- 12: Federbremse
- 13: Antriebsritzel
- 14: Lager
- 15: Wickelkopfkappe
- 16: Rotor
- 17: Rotorwelle
- 18: Stator mit Wickelkopf
- 19: Wickelkopfkappe 19 mit Lager
- 20: Magnetrad
- 21: Kontaktschild
- 22: Kontaktträger
- 23: Nuten des Stators
- 24, 25, 26: lackisolierte Kupferdrähte

- A: Antriebsritzel
- PM: Permanentmagnet
- STW: Statorwicklung
- U1, U2, W1, W2, V1, V2: Anschlüsse des dreiphasigen Motors

## Patentansprüche

1. Vorrichtung zum Antrieb einer Wickelwelle für einen auf- und abwickelbaren Behang, wie Rollläden, Rolltore, Screens, Markisen und Jalousien, mit einem Motor (10) bestehend aus Stator (18) und Rotor (16), einem Getriebe (11) zur Übertragung der Bewegung des Motors (10) auf den Behang sowie einer Bremse, **dadurch gekennzeichnet, dass** der Motor (10) als Synchronmotor mit permanenter Erregung (PMSM) ausgebildet ist, bei dem der Rotor (16) mindestens einen mehrpoligen Permanentmagneten (PM) aufweist und die Statorwicklung (STW) mehrphasig ausgebildet ist, wobei sich der Rotor (16) mit exakt der Drehzahl des äußeren, durch die Statorwicklung (STW) erzeugten Magnetfeld bewegt.

2. Vorrichtung nach Anspruch 1, **dadurch gekennzeichnet, dass** der mehrpolige Permanentmagnet (PM) mehrere Polpaare enthält.

3. Vorrichtung nach Anspruch 1 oder 2, **dadurch gekennzeichnet, dass** das Statorblechpaket als ein auch für Asynchronmotore übliches Statorblechpaket ausgebildet ist.

4. Vorrichtung nach einem der vorangehenden Ansprüche, **dadurch gekennzeichnet, dass** der Stator (18) eine dreiphasige Statorwicklung (STW) enthält.

5. Vorrichtung nach Anspruch 1 oder einem der folgenden Ansprüche, **dadurch gekennzeichnet, dass** die notwendige Bremseinheit (12) in dem Untersetzungsgetriebe (11) angeordnet ist.

6. Vorrichtung nach Anspruch 5, **dadurch gekennzeichnet, dass** die Bremse als Federschlingenbremse ausgebildet ist.

7. Vorrichtung nach einem der vorangehenden Ansprüche, **dadurch gekennzeichnet, dass** eine Sensoreinheit auf dem Rotor (16) angeordnet ist, die zur Endlagensteuerung des Behangs verwendet wird.

8. Vorrichtung nach Anspruch 7, **dadurch gekennzeichnet, dass** die auf dem Rotor (16) angeordnete Sensoreinheit auch benutzt wird, um den Polradwinkel der Synchronmaschine und damit die Belastung durch den Behang zu ermitteln.

9. Vorrichtung nach einem der vorangehenden Ansprüche, **dadurch gekennzeichnet, dass** eine Steuerelektronik eine Speisespannung variabler Frequenz und Spannung zur Verfügung stellt.
